# FASCICULE DE BREVET EUROPEEN

(11) **EP 4 390 558 B1**
(45) Date de publication et mention de la délivrance du brevet: **27.05.2026**
(21) Numéro de dépôt: 22216516.9
(22) Date de dépôt: 23.12.2022
(51) Int. Cl.: G04B 17/22, G04B 37/02, G04G 17/08

(54) **BOITIER DE PROTECTION POUR MONTRE**
SCHUTZGEHÄUSE FÜR ARMBANDUHR
PROTECTIVE CASE FOR WATCH

(43) Date de publication de la demande: 26.06.2024
(73) Titulaire: Omega SA, 2502 Bienne (CH)
(72) Inventeur: UMMEL, Antoine, 2000 Neuchâtel (CH)
(74) Mandataire: ICB SA

(56) Documents cités:
- EP-A1- 3 835 891
- EP-A1- 4 105 735
- CH-A2- 702 419
- CH-A2- 718 146
- JP-A- 2000 105 284
- JP-A- 2002 236 189

## Description

### Domaine technique de l'invention

L'invention concerne un boitier de protection pour montre de type boitier de Dewar protégeant notamment thermiquement des composants mécaniques et/ou fonctionnels d'une montre agencée dans ledit boitier.

### Arrière-plan technologique

Une montre comprend classiquement un bracelet et une boîte de montre comportant plusieurs composants mécaniques, électriques ou électroniques. Il est connu dans l'état de la technique que certains de ces composants ne supportent pas certaines températures, et cessent de fonctionner correctement à ces températures.

Il existe donc un besoin de pouvoir utiliser une montre notamment une montre électronique dans des environnements où peuvent régner de telles températures.

Le document EP 4 105 735 décrit un dispositif de Dewar pour des composants mécaniques et/ou fonctionnels d'une montre, le dispositif comprenant un dispositif d'actionnement d'au moins un élément de commande d'une montre agencée dans une enceinte de ce dispositif de Dewar à partir d'un élément d'habillage actionnable de ce dispositif d'actionnement.

### Résumé de l'invention

A cet effet, l'invention concerne un boitier de Dewar pour des composants mécaniques et/ou fonctionnels d'une montre, pourvu d'une enceinte dans laquelle est susceptible d'être agencée de manière amovible une boite de ladite montre dont une interface d'affichage est disposée en regard d'une glace dudit boitier, ledit boitier comprenant un dispositif de fixation réversible fixant ladite boite de montre dans ladite enceinte en la maintenant éloignée d'éléments fonctionnels formant ladite enceinte de ce boitier, la glace dudit boitier comprenant un élément de variation de la transmittance de ladite glace et un élément de génération d'un éclairement orienté vers une interface d'affichage de la dite montre.

Dans d'autres modes de réalisation :
- l'élément de variation de la transmittance et l'élément de génération d'un éclairement sont compris dans ladite glace (6) en étant superposés ;
- la glace est formée par un assemblage comprenant successivement une couche de matière transparente, un empilement de couches fonctionnelles formant ledit élément de variation de la transmittance et un empilement de couches fonctionnelles formant ledit élément de génération d'un éclairement ;
- la glace est formée par un assemblage comprenant successivement une couche externe de matière transparente, un empilement de couches fonctionnelles formant ledit élément de variation de la transmittance, un empilement de couches fonctionnelles formant ledit élément de génération d'un éclairement et une couche interne de matière transparente ;
- la glace est formée par un assemblage comprenant successivement une première couche externe de matière transparente, un empilement de couches fonctionnelles formant ledit élément de variation de la transmittance, une deuxième couche interne externe de matière transparente et un empilement de couches fonctionnelles formant ledit élément de génération d'un éclairement ;
- le boitier comprend une unité de contrôle reliée à partir d'éléments de liaison aux éléments de variation de la transmittance et de génération d'un éclairement de la glace ;
- l'unité de contrôle comprend au moins un capteur d'évènement tel qu'un capteur de luminosité et/ou un capteur de température ;
- l'élément de variation de la transmittance est un élément électrochrome notamment un élément électrochrome à cristaux liquides ;
- l'élément de génération d'un éclairement est un élément d'éclairage transparent du type OLED ;
- le boitier comprend une unité de contrôle configurée pour commander/contrôler/régler l'élément de variation de la transmittance de manière à réguler dynamiquement une température de l'enceinte dudit boitier ;
- le boitier comprend une unité de contrôle configurée pour commander/contrôler/régler l'élément de génération d'un éclairement de manière à ajuster/régler le contraste de ladite interface d'affichage de la montre ;
- ladite enceinte est sous vide ou quasi sous vide ;
- la glace présente une surface qui est sensiblement supérieure ou strictement supérieure à celle d'une glace de la boite de montre.

### Brève description des figures

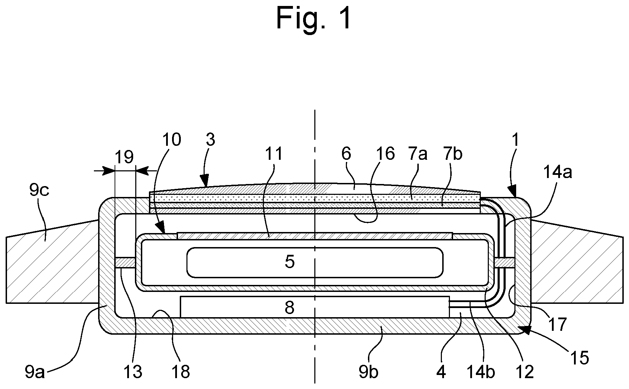

D'autres particularités et avantages ressortiront clairement de la description qui en est faite ci-après, à titre indicatif et nullement limitatif, en référence à la figure 1 annexée, dans laquelle est présentée une vue en coupe d'une représentation schématique du boitier de Dewar, selon des modes de réalisation de l'invention.

### Description détaillée de l'invention

La figure 1 représente un boitier de Dewar 1 pour des composants mécaniques et/ou fonctionnels 5 d'une montre 10. Un tel boitier de Dewar 1 peut aussi être appelé « *boitier* isotherme » ou encore « *boitier de protection thermique ».* Un tel boitier 1 peut comprendre un bracelet, et former alors un dispositif de Dewar aussi appelé *« dispositif de protection thermique »* ou *« dispositif horloger de Dewar »* qui peut être porté par un utilisateur.

Un tel boitier 1 est apte à conférer une bonne isolation thermique à des composants mécaniques et/ou fonctionnels 5 de la montre 10 dont une boite 12 doit être agencée de manière amovible dans une enceinte 4 de ce boitier 1 afin d'assurer une telle isolation thermique à ces composants 5. Autrement dit, ce boitier 1 est notamment formé par la combinaison de ses éléments fonctionnels 15 avec la boite 12 de montre 10 afin de réaliser une isolation thermique idoine pour ces composants mécaniques et/ou fonctionnels 5. Ces éléments fonctionnels 15 du boitier 1 formant cette dite enceinte 4, comprennent une glace 6, une paroi périphérique intérieure 17 d'une carrure 9a et un fond 9b de ce boitier 1. Dans cette configuration, la boite 12 de montre 10 est agencée dans une telle enceinte 4 en étant maintenue éloignée ou à distance des éléments fonctionnels du boitier 1 formant cette dite enceinte 4. On notera que cette paroi périphérique intérieure 17 de la carrure 9a est aussi celle de ladite enceinte 4.

Dans ce boitier 1, comprend un système de contrôle 3 dynamique de la température de son enceinte 4. Un tel système 3 participe à réguler la température régnant dans cette enceinte 4. Pour ce faire, ce système 3 comprend la glace 6 du boitier 1, qui est une glace 6 transparente à opacité variable, aussi appelée plus simplement glace 6 à opacité variable, et une unité de contrôle 8 connectée à cette glace 6 qui est configurée pour contrôler/piloter cette opacité.

La boite 1 comprend une unité de contrôle 8 comportant un circuit électronique comprenant un contrôleur pourvu de ressources matérielles en particulier d'au moins un processeur coopérant avec des éléments de mémoire ainsi que des bus d'adresses de données et de contrôle, et aussi un accumulateur d'énergie autrement appelé batterie. Cette unité de contrôle 8 comprend dans ses éléments de mémoire plus sieurs algorithmes dont un algorithme de gestion de la température dans l'enceinte 4 et du boitier 1 et un algorithme de gestion de l'ajustement dynamique du contraste du dispositif d'affichage de la montre 10. De tels algorithmes sont exécutés par le processeur de cette unité de contrôle 8 en tenant compte notamment de données provenant de capteurs d'évènement compris dans l'unité de contrôle 8 afin d'assurer la gestion de la température dans l'enceinte 4 du boitier 1 et aussi la gestion du contraste de ce dispositif d'affichage. On notera que de telles données peuvent par exemple apporter des informations relatives à des évènements détectés par ces capteurs, lesdits évènements étant susceptibles de contribuer/d'entrainer/de générer une variation de la température dans l'enceinte 4 du boitier 1 et/ou une variation de la luminosité ambiante régnant dans l'environnement du boitier 1 et qui peut perturber/altérer la lecture des informations présentes sur/dans le dispositif d'affichage. Ces évènements peuvent comprendre de manière non limitative et non exhaustive : la détection d'un niveau de luminosité particulier dans l'environnement du boitier 1, en particulier le rayonnement solaire, et/ou la détection d'une variation de température dans l'enceinte 4 par rapport à une température de référence configurable, etc.

Dans ce contexte, le capteur d'évènement, comprend en particulier et de manière non limitative et non exhaustive :
- un capteur de luminosité comprenant un capteur de rayonnement solaire et/ou un capteur de rayonnement solaire infrarouge et/ou un capteur de rayonnement solaire ultraviolet, et/ou
- un capteur de température.

On notera que chaque capteur d'évènement fait partie de l'unité de contrôle 8 et est relié au contrôleur de cette unité 8. Le capteur de température est agencé dans l'enceinte 4 du boitier 1. S'agissant du capteur de luminosité, il est disposé dans le boitier 1 et en particulier dans au moins un des éléments fonctionnels 15 de ce boitier 1 de manière à être exposé à la lumière provenant de l'environnement extérieur du boitier 1. A titre d'exemple, ce capteur de luminosité peut être agencé dans le corps de la glace 6 du boitier 1 et/ou sur une face interne 16 de cette glace 6.

Dans ce boitier 1, l'unité de contrôle 8 comprend un substrat tel qu'un PCB flexible sur lequel est agencé son circuit électronique à l'exception du capteur de luminosité qui peut être compris dans la glace 6 ou sur une face interne 16 de cette glace 6 du boitier 1. Dans ce contexte, l'édification de ce circuit sur ce substrat peut être réalisée à partir de procédés d'impression tridimensionnelle ou encore des procédés d'impression sur polymère. On notera que ce substrat est agencé dans l'enceinte 4 sur un des éléments fonctionnels 15 tels que la face intérieure 18 du fond 9b ou encore sur la paroi périphérique intérieure 17 de l'enceinte 4.

Ainsi que nous l'avons évoqué, l'unité de contrôle 8, et en particulier son contrôleur, est reliée/connectée à partir d'un élément de liaison 14a, 14b à la glace 6 du boitier 1. Plus précisément, l'unité de contrôle 8 est reliée/connectée à partir de ces éléments de liaison 14a, 14b aux éléments de variation de la transmittance 7a et de génération d'un éclairement 7b de la glace 6. Une telle glace 6 comprend l'élément de variation de la transmittance 7a et l'élément de génération d'un éclairement 7b qui sont agencés de manière superposée. Autrement dit, ces éléments de variation de la transmittance 7a et de génération d'un éclairement 7b sont disposés l'un sur l'autre dans la glace 6. Ces éléments 7a, 7b peuvent être en contact ou éloignés l'un de l'autre dans cette glace 6. Ces éléments 7a, 7b peuvent être compris dans cette glace 6 en étant joints l'un à l'autre ou disjoints. Cette superposition de l'élément de variation de la transmittance 7a avec l'élément de génération d'un éclairement 7b est configurée de manière à ce que le l'élément de génération d'un éclairement 7b soit le plus proche de la montre 10 que l'élément de variation de la transmittance 7a puisse l'être.

Plus précisément, dans une première variante, la glace 6 est formée par un assemblage comprenant successivement une couche de matière transparente, un empilement de couches fonctionnelles formant ledit élément de variation de la transmittance 7a et un empilement de couches fonctionnelles formant ledit élément de génération d'un éclairement 7b.

Dans une deuxième variante, la glace 6 est formée par un assemblage comprenant successivement une couche externe de matière transparente, un empilement de couches fonctionnelles formant ledit élément de variation de la transmittance 7a, un empilement de couches fonctionnelles formant ledit élément de génération d'un éclairement 7b et une couche interne de matière transparente. La couche externe de matière transparente correspond à une partie de la glace 6 formant une portion externe du boitier 1. S'agissant de la couche interne de matière transparente elle correspond à la partie de la glace agencée en regard de la glace 11 de la boite 12 de montre 10 et donc du dispositif d'affichage.

Dans une troisième variante, la glace 6 est formée par un assemblage comprenant successivement une première couche externe de matière transparente, un empilement de couches fonctionnelles formant ledit élément de variation de la transmittance 7a, une deuxième couche interne de matière transparente et un empilement de couches fonctionnelles formant ledit élément de génération d'un éclairement 7b.

On notera que la couche de matière transparente est réalisée en une matière comme du verre telle que du verre minéral, de la céramique optique, du verre acrylique, ou encore du verre saphir.

Dans ce contexte, l'élément de variation de la transmittance 7a est par exemple un élément électrochrome notamment un élément électrochrome à cristaux liquides. On rappelle que cette transmittance est la quantité d'énergie (rayonnement thermique ou lumineux) que la glace 6 du boitier 1 est capable de transmettre par rapport au flux d'un rayonnement solaire incident.

Un tel élément de variation de la transmittance 7a, lorsqu'il est un élément électrochrome comporte une couche d'un matériau électrochrome capable d'insérer réversiblement et simultanément des cations et des électrons et dont les états d'oxydation correspondant aux états insérés et désinsérés sont de coloration distincte, un des états présentant une transmission lumineuse plus élevée que l'autre. La réaction d'insertion ou de désinsertion est commandée par une application d'une tension électrique réalisée par l'unité de contrôle 8. Le matériau électrochrome, usuellement à base d'oxyde de tungstène, doit ainsi être mis au contact d'une source d'électrons telle qu'une couche électroconductrice transparente et d'une source de cations telle qu'un électrolyte conducteur ionique.

Cet élément de variation de la transmittance 7a est formé de façon connu en soit, d'un empilement de couches fonctionnelles. Plus précisément lorsqu'il s'agit d'un élément électrochrome à cristaux liquides, cet empilement de couches fonctionnelles comprend un film placé entre des première et deuxième couches électroconductrices et à base d'une matière polymérique dans laquelle sont dispersées des gouttelettes de cristaux liquides, notamment nématiques à anisotropie diélectrique positive. Les cristaux liquides, quand le film est mis sous tension, s'orientent selon un axe privilégié, et configure la glace 6 dans un premier état où la transmittance de cette glace 6 est maximale. Lorsque le film est mis hors tension, en l'absence d'alignement des cristaux, le film devient diffusant et absorbant, et la glace 6 est alors configuré dans un deuxième état où sa transmittance est minimale voire nulle.

Dans une alternative, cet empilement de couches fonctionnelles de l'élément de variation de la transmittance 7a peut comprendre par exemple :
- une première couche électroconductrice ;
- une première couche de matériau électrochrome anodique en oxyde d'iridium hydraté, (elle pourrait être remplacée par une couche en oxyde de nickel hydraté) ;
- une couche en oxyde de tantale hydraté à fonction de protection ;
- une couche d'électrolyte en solution solide de polyoxyéthylène avec de l'acide phosphorique ;
- une deuxième couche de matériau électrochrome cathodique à base d'oxyde de tungstène ;
- une deuxième couche électroconductrice.

On notera que l'empilement de couches fonctionnelles formant l'élément de variation de la transmittance 7a peut comprendre une couche supplémentaire en polymère thermoplastique tel que le polybutyral de vinyle connu sous l'acronyme PVB qui, de préférence, contient des agents filtrant les ultraviolets. Une telle couche peut être agencée au-dessous ou en dessous de la première couche électroconductrice.

S'agissant de l'élément de génération d'éclairement 7b, il correspond par exemple un élément d'éclairage transparent en particulier un élément d'éclairage à diodes électroluminescentes organiques connu sous l'acronyme OLED (pour « *Organic Light Emitting* Diodes » en anglais).

Un tel élément d'éclairage de type OLED comporte un empilement de couches fonctionnelles transparentes comprenant des couches de matériaux électroluminescents organiques alimentés en électricité par des électrodes transparentes généralement sous forme de première et deuxième couches électroconductrices, de cet empilement, encadrant ce(s) couches de matériau(x). Une tel élément d'éclairage 7b de type OLED peut être prévu pour émettre un rayonnement polychromatique défini à 0° par des coordonnées (x1, y1) dans le diagramme colorimétrique CIE XYZ 1931, coordonnées données donc pour un rayonnement à la normale. Cet élément d'éclairage transparent 7b est configuré pour émettre un rayonnement lumineux en direction du dispositif d'affichage ou orienté vers le dispositif d'affichage.

De manière non limitative et non exhaustive, les couches électroluminescentes peuvent comprendre des petites molécules, on parle alors de SM-OLED (« Small Molecule Organic Light Emitting Diodes » en anglais), ou encore comprendre des polymères, on parle de PLED (« Polymer Light Emitting Diodes » en anglais).

Dans les différentes variantes évoquées précédemment, l'élément de variation de la transmittance 7a et l'élément de génération d'un éclairement 7b peuvent être agencés/appliqués/imprimés/déposés l'un avec l'autre, ou avec le ou les couches de matière transparente.

En particulier, dans la première variante, l'élément de variation de la transmittance 7a et l'élément de génération d'un éclairement 7b peuvent être agencés/appliqués/imprimés/déposés l'un avec l'autre afin de former un ensemble/assemblage, et ensuite cet ensemble peut être appliqué/agencé sur une surface inférieure de la couche en matière transparente en formant alors la face interne 16 de cette glace 6.

Dans cette configuration, l'unité de contrôle 8 en commandant/pilotant la variation d'une tension électrique appliquée aux première et deuxième couches électroconductrices de l'élément de variation de la transmittance 7a, permet de faire varier la propriété de transmittance de la glace 6 du boitier 1 entre les premier et deuxième états de transmittance. Rappelons que le premier état est ici relatif à une transmittance maximale de cette glace 6 lors duquel état, cette glace 6 du boitier 1 est alors transparente autorisant ainsi le rayonnement solaire à pénétrer dans l'enceinte 4 de ce dernier. Le deuxième état est quant à lui relatif à une transmittance minimale voire nulle de la glace 6, lors duquel état, la glace 6 est alors en tout ou partie opaque empêchant/bloquant la pénétration du rayonnement solaire, au moins à 99 pourcent, dans cette enceinte 4. Autrement dit, lors de cette deuxième état, le rayonnement solaire n'est plus transmis par la glace 6 dans l'enceinte 4 du boitier 1.

Cette unité de contrôle 8 est aussi apte à commander/piloter la variation d'une tension électrique appliquée aux première et deuxième couches électroconductrices de l'élément de génération d'éclairement 7b afin de faire varier l'éclairage/l'intensité lumineuse appliqué (e) au dispositif d'affichage, et en particulier la répartition de l'éclairage/l'intensité lumineuse sur ce dispositif d'affichage. Ainsi, l'unité de contrôle 8 est alors apte à configurer un contraste du dispositif d'affichage qui est adapté à la luminosité environnante et ce, dans l'optique de faciliter la lecture de ce dispositif d'affichage et/ou d'apporter un confort de lecture à l'utilisateur de ce dispositif de Dewar.

Cette variation de cet éclairage généré par l'élément de génération d'éclairement 7b, autrement appelé variation d'intensité lumineuse, s'effectue entre deux états. Un premier état relatif à une intensité lumineuse maximale et un deuxième état relatif à une intensité lumineuse nulle.

Par ailleurs, ainsi que nous l'avons précédemment évoqué, la boite 12 de montre 10 est agencée dans le boitier 1 en étant éloignée ou maintenue à distance 19 ou encore à l'écart 19 de la paroi périphérique intérieure 17 de l'enceinte 4 et ce, grâce au dispositif de fixation 13 réversible du boitier 1. Autrement dit, un tel dispositif de fixation 13 est apte à configurer un écartement 19 entre ladite boite 12 et des éléments fonctionnels du boitier 1 formant ladite enceinte 4. Dans cette configuration, le dispositif de fixation 13 participe à réduire voire à supprimer toute conduction thermique entre la paroi périphérique intérieure 17 de la carrure 9a (ou de l'enceinte 4) et/ou le fond 9b et/ou la glace 6 avec la boite 12 de montre 10 en particulier avec une face globale externe de cette boite 12. Cette face globale externe comporte une face supérieure comprenant la glace 11 de la boite 12 de cette montre 10, une face inférieure comprenant un fond de ladite boite 12 et une paroi périphérique externe d'une carrure de cette boite 12.

Dans cette configuration, le dispositif de fixation 13 réalisant une fixation réversible de la boite 12 de montre 10 sur la paroi périphérique intérieure 17 de l'enceinte 4 de ce boitier 1, peut comprendre :
- des organes de liaison ayant chacun des première et deuxième extrémités susceptibles de relier respectivement à la boite 12 de montre 10 et à la paroi périphérique intérieure 17 de l'enceinte 4 de ce boitier 1. Le corps de chaque organe présente une structure particulière qui contribue à assurer une réduction des pertes thermiques vers l'environnement extérieur du boitier 1 du dispositif de Dewar et donc à assurer une température interne dans la boite 12 de montre 10 qui est stable, et/ou
- des organes de liaison configurés pour assurer une sustentation magnétique de ladite boite 12 de montre 10 dans ladite enceinte 4. En effet, ces organes de liaison sont configurés pour assurer et un maintenir un écartement 19 entre ladite boite 12 et les éléments fonctionnels 15 formant ladite enceinte 4 du boitier 1. De tels organes de liaison participent à réduire voire à supprimer toute conduction thermique entre la paroi périphérique intérieure 17 de la carrure 9a et/ou le fond 9b et/ou la glace 11 avec la boite 12 de montre 10 en particulier avec une face globale externe de cette boite 12.

On notera que la boite 12 est comprise dans une montre 10 qui peut être une montre électronique par exemple une montre à quartz, ou encore une montre mécanique ou encore une montre électromécanique.

Les composants mécaniques et/ou fonctionnels 5 de la montre 10, évoqués précédemment, comprennent de manière non limitative et non exhaustive : un mouvement horloger, dispositif d'affichage tel qu'un cadran, des aiguilles, des bagues, joints et/ou des composants électroniques et/ou électriques. On remarquera en particulier que de tels composants électroniques et/ou électriques comportent par exemple un dispositif d'affichage, un processeur, une mémoire, un composant de stockage d'énergie, un moteur, un circuit intégré et un oscillateur électronique, etc.

Dans ce contexte, le boitier 1 comporte la carrure 9a sur laquelle est monté un bracelet 9c afin de permettre à un utilisateur du dispositif de Dewar de le porter. Ce boitier 1 comporte aussi la glace 6 et le fond 9b mentionnés plus avant. Dans ce boitier 1, on notera que la glace 6 comprend de préférence une surface qui est sensiblement supérieure ou strictement supérieure à une glace 11 de la boite 12 de montre 10. Autrement dit, la face interne 16 de la glace 6 présente une surface qui est sensiblement supérieure ou strictement supérieure ou égale à celle d'une face supérieure de la glace 11 de la montre 10.

Ainsi que nous l'avons vu, les éléments fonctionnels 15 tels que la glace 6, la carrure 9a et le fond 9b de ce boitier 1 définissent ensemble l'enceinte 4 de ce boitier 1 qui est susceptible de recevoir la boite 12 de montre 10. Ces trois éléments 15 du boitier 1 à savoir la carrure 9a, la glace 6 et le fond 9b peuvent être des éléments distincts qui sont joints ensemble pour construire cette enceinte 4. De manière alternative, la carrure 9a et le fond 9b du boitier 1 peuvent former ensemble une pièce monobloc, ladite pièce monobloc définissant une ouverture opposée au fond 9b qui est susceptible d'être refermée par la glace 6 et ce, de manière réversible et étanche et hermétique. Dans une alternative, la carrure 9a et la glace 6 du boitier 12 de montre 10, peuvent former ensemble une pièce monobloc, ladite pièce monobloc définissant une ouverture opposée à la glace 6 qui est susceptible d'être refermée par le fond 9b et ce, aussi de manière réversible et étanche et hermétique.

La carrure 9a et le fond 9b sont de préférence réalisés de manière non limitative et non exhaustive en une matière métallique, en verre ou en des résines polymères thermodurcissables ou thermoplastiques renforcées de fibres de carbone ou de verre ou encore en matériaux céramiques. On notera que lorsque carrure 9a et le fond 9b sont transparents ou semi-transparents en étant par exemple en verre, la paroi périphérique intérieure 17 de la carrure 9a et la face intérieure 18 du fond 9b peuvent être revêtues d'un enduit réfléchissant métallique ou similaire, tel que par exemple d'une couche d'argent.

En outre dans ce boitier 1, lorsque la boite 12 de montre 10 est agencée dans l'enceinte 4 du boitier 1, l'espace définie entre cette boite 12 et la paroi périphérique intérieure 17 de la carrure 9a, le fond 9b et la glace 6 est vide de matière ou quasi vide. Autrement dit, l'enceinte 4 est sous vide ou quasi sous vide.

On comprend donc que dans cette configuration, ce boitier 1 présente les mêmes propriétés et caractéristiques qu'un tube/vase de Dewar bien connu dans l'état de la technique. Ainsi que nous l'avons précédemment évoqué, les propriétés et caractéristiques de ce boitier 1 participent à lui conférer une bonne isolation thermique au regard de températures notamment extrêmes pouvant régner dans l'environnement extérieur dans lequel un tel boitier 1 peut être localisé.

En complément, on notera que les composants mécaniques et/ou fonctionnels 5 de la montre 10 peuvent être amagnétiques et/ou que la boite 12 de la montre 10 peut être réalisée en un matériau ou être couvert d'un revêtement permettant d'isoler ces composants de champs magnétiques.

En outre, le dispositif de fixation 13 contribue à disposer la boite 12 de montre 10 dans ce boitier 1 de manière à ce que la glace 11 de cette boite 12 de montre 10 soit agencée en regard de la glace 6 du boitier 1 de manière à ce que les informations comprises sur le cadran et/ou l'interface d'affichage de cette montre 10 puissent être perçues au travers de la glace 6 transparente du boitier 1 par l'utilisateur porteur du boitier 1.

Ainsi un tel boitier 1 fournit aux composants mécaniques et/ou fonctionnels 5 de la montre 10 une très bonne isolation thermique vis-à-vis de l'environnement extérieur en réduisant voire en empêchant une déperdition thermique par radiation des composants agencés dans la boite 12 de montre 10 pendant une longue durée. Ainsi, lorsque la température à l'extérieur du boitier 1 atteint des valeurs extrêmes, la température à l'intérieur de l'enceinte 4 reste quant à elle sensiblement égale à la température présente dans la boite 12 de montre 10 lors de son agencement dans le boitier 1, typiquement de l'ordre de 20 °C. On notera que quelles que soient les conditions de température régnant dans l'environnement du boitier 1, la température présente dans la boite 12 de montre 10 est une température qui n'entrave pas le bon fonctionnement de la montre 10. Cette température est maintenue sur une durée qui est 2 à 18 fois plus importante que la durée pendant laquelle une telle boite 12 de montre 10 serait capable de préserver une température de fonctionnement de ses composants en étant située directement dans un tel environnement où règnent de telles températures notamment extrêmes c'est-à-dire en étant située hors du boitier 1. On conçoit ainsi qu'une telle configuration permet de protéger les composants mécaniques et/ou fonctionnels 5 de la montre 10, ainsi que de participer à assurer leur fonctionnement de manière optimale dans des conditions de température extérieure extrêmes.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées.

## Revendications

1. Boitier de Dewar (1) pour des composants mécaniques et/ou fonctionnels (5) d'une montre (10), pourvu d'une enceinte (4) dans laquelle est susceptible d'être agencée de manière amovible une boite (12) de ladite montre (10) dont une interface d'affichage est disposée en regard d'une glace (6) dudit boitier (1), ledit boitier (1) comprenant un dispositif de fixation (13) réversible fixant ladite boite (12) de montre (10) dans ladite enceinte (4) en la maintenant éloignée d'éléments fonctionnels (15) formant ladite enceinte 4 de ce boitier (2), **caractérisé en ce que** la glace (6) dudit boitier (1) comprend un élément de variation de la transmittance (7a) de ladite glace (6) et un élément de génération d'un éclairement (7b) orienté vers une interface d'affichage de la dite montre (10).

2. Boitier (1) selon la revendication précédente, **caractérisé en ce que** l'élément de variation de la transmittance (7a) et l'élément de génération d'un éclairement (7b) sont compris dans ladite glace (6) en étant superposés.

3. Boitier (1) selon l'une quelconque des revendications précédentes, **caractérisé en ce que** la glace (6) est formée par un assemblage comprenant successivement une couche de matière transparente, un empilement de couches fonctionnelles formant ledit élément de variation de la transmittance (7a) et un empilement de couches fonctionnelles formant ledit élément de génération d'un éclairement (7b).

4. Boitier (1) selon l'une quelconque des revendications 1 et 2, **caractérisé en ce que** la glace (6) est formée par un assemblage comprenant successivement une couche externe de matière transparente, un empilement de couches fonctionnelles formant ledit élément de variation de la transmittance (7a), un empilement de couches fonctionnelles formant ledit élément de génération d'un éclairement (7b) et une couche interne de matière transparente.

5. Boitier (1) selon l'une quelconque des revendications 1 et 2, **caractérisé en ce que** la glace (6) est formée par un assemblage comprenant successivement une première couche externe de matière transparente, un empilement de couches fonctionnelles formant ledit élément de variation de la transmittance (7a), une deuxième couche interne externe de matière transparente et un empilement de couches fonctionnelles formant ledit élément de génération d'un éclairement (7b).

6. Boitier (1) selon l'une quelconque des revendications précédentes, caractérisé qu'il comprend une unité de contrôle (8) reliée à partir d'éléments de liaison (14a, 14b) aux éléments de variation de la transmittance (7a) et de génération d'un éclairement (7b) de la glace (6).

7. Boitier (1) selon la revendication précédente, **caractérisé en ce que** l'unité de contrôle (8) comprend au moins un capteur d'évènement tel qu'un capteur de luminosité et/ou un capteur de température.

8. Boitier (1) selon l'une quelconque des revendications précédentes, **caractérisé en ce que** l'élément de variation de la transmittance (7a) est un élément électrochrome notamment un élément électrochrome à cristaux liquides.

9. Boitier (1) selon l'une quelconque des revendications précédentes, **caractérisé en ce que** l'élément de génération d'un éclairement (7b) est un élément d'éclairage transparent du type OLED.

10. Boitier (1) selon l'une quelconque des revendications précédentes, caractérisé qu'il comprend une unité de contrôle (8) configurée pour commander/contrôler/régler l'élément de variation de la transmittance (7a) de manière à réguler dynamiquement une température de l'enceinte (4) dudit boitier (1).

11. Boitier (1) selon l'une quelconque des revendications précédentes, caractérisé qu'il comprend une unité de contrôle (8) configurée pour commander/contrôler/régler l'élément de génération d'un éclairement (7b) de manière à ajuster/régler le contraste de ladite interface d'affichage de la montre (10).

12. Boitier (1) selon l'une quelconque des revendications précédentes, **caractérisé en ce que** ladite enceinte (4) est sous vide ou quasi sous vide.

13. Boitier (1) selon l'une quelconque des revendications précédentes, **caractérisé en ce que** la glace (6) présente une surface qui est sensiblement supérieure ou strictement supérieure à celle d'une glace (11) de la boite (12) de montre (10).

## Patentansprüche

1. Dewar-Gehäuse (1) für mechanische und/oder funktionelle Komponenten (5) einer Uhr (10), mit einer Kammer (4), in der ein Uhrgehäuse (12) der genannten Uhr (10) lösbar angeordnet werden kann, dessen Anzeigeschnittstelle einem Glas (6) des genannten Gehäuses (1) gegenüber angeordnet ist, wobei das genannte Gehäuse (1) eine reversible Befestigungsvorrichtung (13) umfasst, die das genannte Uhrgehäuse (12) der Uhr (10) in der genannten Kammer (4) befestigt und dabei von funktionellen Elementen (15), die die genannte Kammer 4 dieses Gehäuses (2) bilden, beabstandet hält, **dadurch gekennzeichnet, dass** das Glas (6) des genannten Gehäuses (1) ein Element zur Variation der Transmittanz (7a) des genannten Glases (6) sowie ein auf eine Anzeigeschnittstelle der genannten Uhr (10) ausgerichtetes Element zur Erzeugung einer Beleuchtung (7b) umfasst.

2. Gehäuse (1) nach dem vorhergehenden Anspruch, **dadurch gekennzeichnet, dass** das Element zur Variation der Transmittanz (7a) und das Element zur Erzeugung einer Beleuchtung (7b) in dem genannten Glas (6) enthalten und übereinander angeordnet sind.

3. Gehäuse (1) nach einem der vorhergehenden Ansprüche, **dadurch gekennzeichnet, dass** das Glas (6) durch einen Schichtaufbau gebildet ist, der nacheinander eine Schicht aus transparentem Material, einen Stapel von Funktionsschichten, der das genannte Element zur Variation der Transmittanz (7a) bildet, und einen Stapel von Funktionsschichten, der das genannte Element zur Erzeugung einer Beleuchtung (7b) bildet, umfasst.

4. Gehäuse (1) nach Anspruch 1 oder 2, **dadurch gekennzeichnet, dass** das Glas (6) durch einen Schichtaufbau gebildet ist, der nacheinander eine äußere Schicht aus transparentem Material, einen Stapel von Funktionsschichten, der das genannte Element zur Variation der Transmittanz (7a) bildet, einen Stapel von Funktionsschichten, der das genannte Element zur Erzeugung einer Beleuchtung (7b) bildet, und eine innere Schicht aus transparentem Material umfasst.

5. Gehäuse (1) nach Anspruch 1 oder 2, **dadurch gekennzeichnet, dass** das Glas (6) durch einen Schichtaufbau gebildet ist, der nacheinander eine erste äußere Schicht aus transparentem Material, einen Stapel von Funktionsschichten, der das genannte Element zur Variation der Transmittanz (7a) bildet, eine zweite interne/externe Schicht aus transparentem Material und einen Stapel von Funktionsschichten, der das genannte Element zur Erzeugung einer Beleuchtung (7b) bildet, umfasst.

6. Gehäuse (1) nach einem der vorhergehenden Ansprüche, **dadurch gekennzeichnet, dass** es eine Steuereinheit (8) umfasst, die über Verbindungselemente (14a, 14b) mit den Elementen zur Variation der Transmittanz (7a) und zur Erzeugung einer Beleuchtung (7b) des Glases (6) verbunden ist.

7. Gehäuse (1) nach dem vorhergehenden Anspruch, **dadurch gekennzeichnet, dass** die Steuereinheit (8) mindestens einen Ereignissensor, wie etwa einen Helligkeitssensor und/oder einen Temperatursensor, umfasst.

8. Gehäuse (1) nach einem der vorhergehenden Ansprüche, **dadurch gekennzeichnet, dass** das Element zur Variation der Transmittanz (7a) ein elektrochromes Element, insbesondere ein elektrochromes Element mit Flüssigkristallen, ist.

9. Gehäuse (1) nach einem der vorhergehenden Ansprüche, **dadurch gekennzeichnet, dass** das Element zur Erzeugung einer Beleuchtung (7b) ein transparentes Beleuchtungselement vom Typ OLED ist.

10. Gehäuse (1) nach einem der vorhergehenden Ansprüche, **dadurch gekennzeichnet, dass** es eine Steuereinheit (8) umfasst, die dazu ausgelegt ist, das Element zur Variation der Transmittanz (7a) anzusteuern, zu steuern oder zu regeln, um die Temperatur der genannten Kammer (4) des genannten Gehäuses (1) dynamisch zu regeln.

11. Gehäuse (1) nach einem der vorhergehenden Ansprüche, **dadurch gekennzeichnet, dass** es eine Steuereinheit (8) umfasst, die dazu ausgelegt ist, das Element zur Erzeugung einer Beleuchtung (7b) anzusteuern, zu steuern oder zu regeln, um den Kontrast der genannten Anzeigeschnittstelle der Uhr (10) anzupassen oder zu regeln.

12. Gehäuse (1) nach einem der vorhergehenden Ansprüche, **dadurch gekennzeichnet, dass** die genannte Kammer (4) unter Vakuum oder unter Quasivakuum steht.

13. Gehäuse (1) nach einem der vorhergehenden Ansprüche, **dadurch gekennzeichnet, dass** das Glas (6) eine Fläche aufweist, die im Wesentlichen größer oder strikt größer ist als die eines Glases (11) des Uhrgehäuses (12) der Uhr (10).

## Claims

1. A Dewar casing (1) for mechanical and/or functional components (5) of a watch (10), provided with an enclosure (4) wherein a case (12) of said watch (10) can be removably arranged, a display interface of which is disposed facing a crystal (6) of said casing (1), said casing (1) comprising a reversible fixing device (13) fixing said watch (10) case (12) in said enclosure (4) while keeping it away from functional elements (15) forming said enclosure (4) of this case (2), **characterised in that** the crystal (6) of said casing (1) comprises an element for varying the transmittance (7a) of said crystal (6) and an element for generating illumination (7b) directed towards a display interface of said watch (10).

2. The casing (1) according to the preceding claim, **characterised in that** the element (7a) for varying the transmittance and the element (7b) for generating illumination are comprised in said crystal (6), being superimposed.

3. The casing (1) according to any one of the preceding claims, **characterised in that** the crystal (6) is formed by an assembly comprising successively a layer of transparent material, a stack of functional layers forming said transmittance variation element (7a) and a stack of functional layers forming said illumination generation element (7b).

4. The casing (1) according to any one of claims 1 and 2, **characterised in that** the crystal (6) is formed by an assembly comprising successively an outer layer of transparent material, a stack of functional layers forming said transmittance variation element (7a), a stack of functional layers forming said illumination generation element (7b) and an inner layer of transparent material.

5. The casing (1) according to any one of claims 1 and 2, **characterised in that** the crystal (6) is formed by an assembly comprising successively a first outer layer of transparent material, a stack of functional layers forming said transmittance variation element (7a), a second outer inner layer of transparent material and a stack of functional layers forming said illumination generation element (7b).

6. The casing (1) according to any one of the preceding claims, **characterised in that** it comprises a control unit (8) connected via connecting elements (14a, 14b) to the elements for varying the transmittance (7a) and generating an illumination (7b) of the crystal (6).

7. The casing (1) according to the preceding claim, **characterised in that** the control unit (8) comprises at least one event sensor such as a luminosity sensor and/or a temperature sensor.

8. The casing (1) according to any one of the preceding claims, **characterised in that** the transmittance variation element (7a) is an electrochromic element, in particular a liquid crystal electrochromic element.

9. The casing (1) according to any one of the preceding claims, **characterised in that** the illumination generation element (7b) is a transparent lighting element of the OLED type.

10. The casing (1) according to any one of the preceding claims, **characterised in that** it comprises a control unit (8) configured to drive/control/adjust the transmittance variation element (7a) so as to dynamically regulate a temperature of the enclosure (4) of said casing (1).

11. The casing (1) according to any one of the preceding claims, **characterised in that** it comprises a control unit (8) configured to drive/control/set the illumination generation element (7b) so as to adjust/set the contrast of said watch display interface (10).

12. The casing (1) according to any one of the preceding claims, **characterised in that** said enclosure (4) is under vacuum or near-vacuum.

13. The casing (1) according to any one of the preceding claims, **characterised in that** the crystal (6) has a surface that is substantially greater than or strictly greater than that of a crystal (11) of the watch (10) case (12).
